# EUROPÄISCHE PATENTANMELDUNG

(11) **EP 2 082 955 A1**
(43) Veröffentlichungstag der Anmeldung: **29.07.2009**
(21) Anmeldenummer: 08001320.4
(22) Anmeldetag: 24.01.2008
(51) Int. Cl.: B63H 21/20

(54) **Hybridmodul für Wasserfahrzeuge**

(71) Anmelder: Jegel, Franz Peter, Ing., 4400 Steyr (AT)
(72) Erfinder: Jegel, Franz-Peter, 4400 Steyr (AT); Bernoegger, Johannes, 4591 Molln (AT)
(74) Vertreter: Staudt, Armin Walter

(57) **Zusammenfassung**

Die Erfindung betrifft ein Hybridmodul zum Einbau zwischen einem Verbrennungsmotor (6) und einem Getriebe (4) eines Wasserfahrzeuges, wobei das Schwungrad wie allgemein üblich im Gehäuse des Verbrennungsmotors (6) angeordnet ist. Es zeichnet sich dadurch aus, dass das Hybridmodul (7) außerhalb des Gehäuses des Verbrennungsmotors (6) vorgesehen ist und aus einem Gehäuse (8), einem darin angeordneten Generator-Motor (11), sowie einer geeigneten Schaltung (10) zur wahlweisen Verbindung des Getriebes (4) mit dem Verbrennungsmotor (6) und/oder dem Generator-Motor (11) besteht.

## Beschreibung

Die vorliegende Erfindung betrifft ein Hybridmodul für Wasserfahrzeuge, welches den wahlweisen Antrieb eines Wasserfahrzeugs mit Verbrennungsmotor oder mit Elektromotor oder über einen Verbund beider Motoren das Boosten oder den Generatorbetrieb, insbesondere zur Aufladung der Batterien ermöglicht.
Die Erfindung betrifft insbesondere ein Bauteil zum Nachrüsten bestehender Antriebssysteme auf der Basis von Verbrennungsmotoren für Wasserfahrzeuge zur nachträglichen Umstellung auf einen Hybridantrieb oder zur Integration in neue Antriebssysteme.

### Stand der Technik

In den letzten Jahren wurden vermehrt abgasfreie Antriebssysteme für den Betrieb von Wasserfahrzeugen in ökologisch sensiblen Gebieten gefordert. Dieser Trend setzt sich nun auch in und um Hafengebiete und Naturschutzgebiete fort und betrifft zunehmend Wasserfahrzeuge des kommerzielle und privaten Gebrauchs, etwa Wassertaxi, Versorgungsschiffe und andere Jachten.
Hybridantriebe, welche den wahlweisen Antrieb eines Fahrzeuges mittels Vertrennungsmotor oder mittels Elektromotor ermöglichen, sind bereits Stand der Technik. So beschreibt die US 5,214,358 einen Generator der mit dem Schwungrad eines Verbrennungsmotors verbunden ist und Regelungseinrichtungen aufweist, zur Ladung von Batterien, die einen separaten Elektromotor speisen. Diese Lösung stellt jedoch keinen Generatormotor für einen direkten Elektroantrieb dar, sondern es sind zwei voneinander getrennte elektrische Einheiten für den Elektroantrieb des Fahrzeuges erforderlich. Diese Konstruktion ist daher aufwändig und mit hohem Zusatzgewicht verbunden. Sie ist auch nicht zur Nachrüstung bestehender Bootsantriebe geeignet.
Einen ähnlichen Hybridantrieb beschreibt die DE 296 04 437 mit einem Dieselaggregat, einem Elektromotor und einem Generator, dessen Ziel die Reduzierung des Treibstoffverbrauchs ist. Diese Lösung stellt ebenfalls keinen Generatormotor mit direkter mechanischer Verbindung zum Getriebe dar und ist auch nicht geeignet, das Wasserfahrzeug bei abgeschalteter Verbrennungsmaschine anzutreiben. Diese Vorrichtung ist ebenfalls nicht zur Nachrüstung bestehender Bootsantriebe geeignet.
Die WO 2007/075148 beschreibt einen Generator-Motor, welcher im Schwungradgehäuse einer Verbrennungsmaschine integriert ist und zur Generierung von Gleichstrom oder Wechselstrom und als alternativer Antriebsmotor dient. Diese Vorrichtung ist jedoch nicht zur Nachrüstung bestehender Bootsantriebe geeignet. Sie ist auch nicht geeignet, das Wasserfahrzeug vollständig abgekoppelt vom Generator-Motor zu betreiben, wodurch der Wirkungsgrad des Verbrennungsmotors verringert ist.

### Technische Aufgabe

Die vorliegende Erfindung stellt sich daher die Aufgabe, einen Bauteil zu schaffen, welcher konstruktiv einfach aufgebaut ist, den wahlweisen Antrieb entweder über den Verbrennungsmotor oder über einen Elektroantrieb oder über beide Antriebssysteme zu ermöglichen und nicht wesentlich das Gesamtgewicht des Antriebsaggregates erhöht. In einer bevorzugten Ausführungsform soll ein Verbrennungsmotor-Generatorbetrieb möglich sein, um bei Bedarf die Batterien laden zu können ohne dass Vortriebskraft erzeugt wird.
Diese Aufgabe wird durch ein Hybridmodul gelöst, welches die technischen Merkmale von Anspruch 1 aufweist. Vorteilhafte Ausgestaltungen oder Weiterbildungen dieses Hybridmoduls sind Gegenstand der abhängigen Ansprüche.

### Ausführungsbeispiel

Die Erfindung wird nachstehend anhand der Figuren näher erläutert. Darin zeigen:
- **Fig. 1**: einen Schnitt durch das Heck eines Wasserfahrzeuges mit einem Verbrennungsmotor, einer Antriebseinrichtung, bestehend aus dem Getriebe und den Propellern und einem zwischen dem Getriebe und dem Verbrennungsmotor angeordneten Hybridmodul;
- **Fig. 2**: einen Schnitt gemäß Fig. 1 mit einer ersten alternativen Schaltung im Hybridmodul;
- **Fig. 3**: einen Schnitt gemäß Fig. 1 mit einer zweiten alternativen Schaltung im Hybridmodul;
- **Fig. 4**: einen Schnitt gemäß Fig. 1 mit einer dritten alternativen Schaltung im Hybridmodul;
- **Fig. 5**: einen Schnitt gemäß Fig. 1 mit einer vierten alternativen Schaltung im Hybridmodul;
- **Fig. 6**: einen Schnitt gemäß Fig. 1 mit einer fünften alternativen Schaltung im Hyridmodul;
- **Fig. 7**: einen Schnitt gemäß Fig. 1 mit einer sechsten alternativen Schaltung im Hybridmodul;
- **Fig. 8**: einen Schnitt gemäß Fig. 1 mit einer schematischen Darstellung einer Anordnung des Generator-Motors in radialer Bauart um die zentrischen Schaltungselemente und die Hauptachse im Hybridmodul;
- **Fig. 9**: einen Schnitt gemäß Fig. 8 mit einer schematischen Darstellung einer Anordnung des Generator-Motors in kompakter Bauart in paralleler Lage zur Hauptachse im Hybridmodul;
- **Fig. 10**: einen Schnitt gemäß Fig. 8 mit einer schematischen Darstellung einer Anordnung des Generator-Motors in kompakter Bauart in gewinkelter Lage, beispielsweise wie hier im rechten Winkel zur Hauptachse im Hybridmodul;
- **Figuren 11 bis 13**: Darstellungen des Hybridmoduls als nachträgliches Einbaumodul mit unterschiedlichen Anschlussflanschen;
- **Figuren 14 bis 19**: verschiedene Darstellungen bei denen das Gehäuse des Hybridmoduls als Erweiterung des Getriebegehäuses ausgebildet ist.

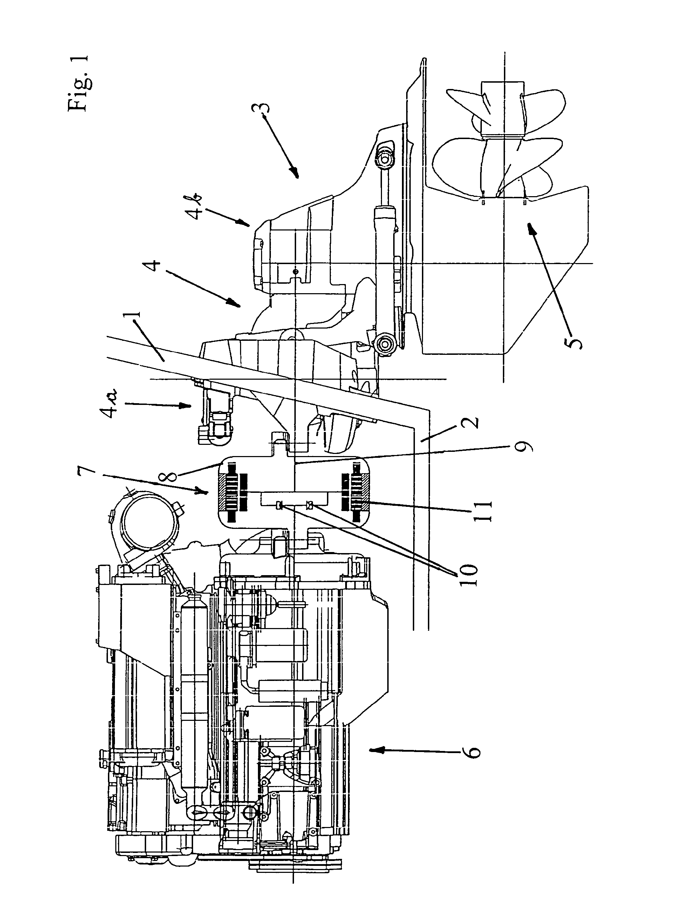

Fig. 1 zeigt schematisch einen Teil der Heckwand 1 und des Bodens 2 eines Wasserfahrzeuges. Die Antriebseinrichtung 3 besteht aus dem Getriebe 4, das sich aus ersten Getriebeteilen und der Transomplatte 4a und dem eigentlichen Getriebe 4b zusammensetzt und den Propellern 5. Innerhalb des Wasserfahrzeugs befindet sich der Verbrennungsmotor 6. Zwischen dem Verbrennungsmotor 6 und dem Getriebeteil 4a ist das Hybridmodul 7 angeordnet, welches aus dem Gehäuse 8 und dem hier ringförmig konzentrisch zur Hauptwelle 9 und den Schaltelementen 10 angeordneten Generator-Motor 11 besteht. Die Schaltelemente 10 sind hier als Freilauf ausgebildet.

Diese Variante ermöglicht sowohl einen Antrieb über den Verbrennungsmotor 6 als auch einen rein elektrischen Antrieb über den Generator-Motor 11, der hierbei dann als reiner Elektromotor wirkt. Erfolgt der Antrieb über den Verbrennungsmotor 6, so wirkt der Generator-Motor 11 als Generator und speist sowohl die Bordelektrik als auch ein Batterienpaket, welches bei abgeschaltetem Verbrennungsmotor 6 die Versorgungsenergie für den Elektromotor liefert. Für den Start des Verbrennungsmotors ist hierbei allerdings ein separater Starter erforderlich. Ein mechanisches Abkoppeln des Generators ist nicht möglich, er kann nur elektrisch abgekoppelt werden. Der Antrieb kann mit der jeweiligen Schaltung im Getriebe 4 vorwärts, rückwärts und in Neutralstellung laufen.

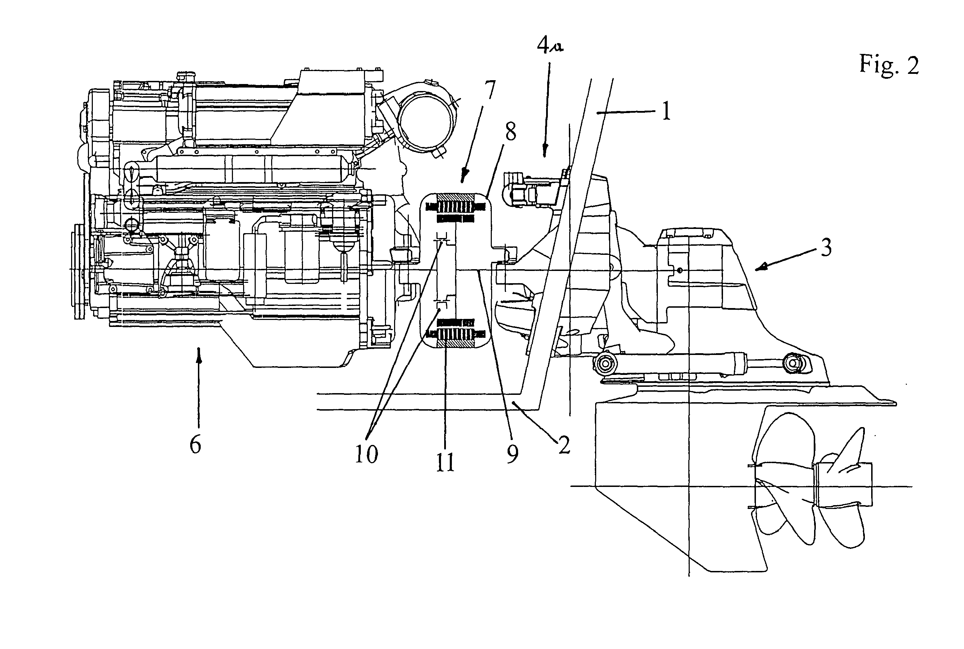

Bei der alternativen Ausführung des Hybridmoduls nach Fig. 2 bestehen die Schaltelemente 10 aus formschlüssigen Kupplungen. Dabei kann es sich beispielsweise um Klauenkupplungen, Synchronisierungen und dgl. handeln. Im Unterschied zur Variante nach Fig. 1 ist hier ein Starten des Verbrennungsmotors bei geschlossener Kupplung möglich. Diese Ausführungsform ermöglicht sowohl einen Antrieb über den Verbrennungsmotor 6 als auch einen rein elektrischen Antrieb über den Generator-Motor 11, der auch hier dann als reiner Elektromotor wirkt. Bei einem Antrieb über den Verbrennungsmotor 6 wirkt der Generator-Motor 11 als Generator. Ein mechanisches entkoppeln des Generators ist auch hier nicht möglich. Der Antrieb kann wieder vorwärts, rückwärts und in Neutralstellung laufen.

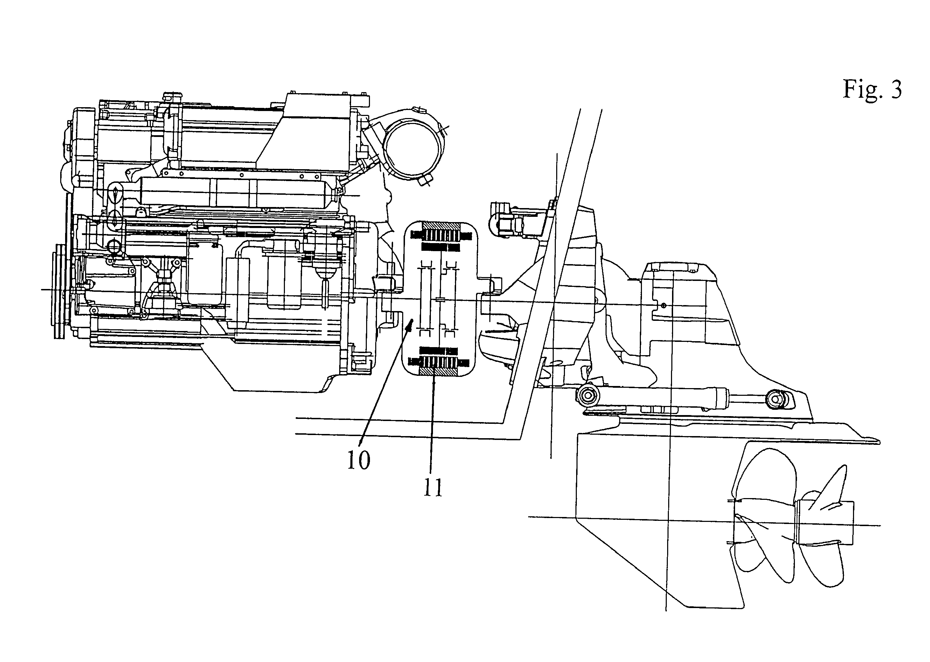

Bei einer weiteren alternativen Ausführung des Hybridmoduls nach Fig. 3 bestehen die Schaltelemente 10 aus zwei formschlüssigen Kupplungen. Bei dieser Variante ist es gegenüber der Variante gemäß Figur 2 auch möglich, den Antrieb über den Verbrennungsmotor vom Generator-Motor mechanisch zu entkoppeln. Dadurch wird ein höherer Wirkungsgrad erzielbar als bei der Ausführung nach Fig. 2. Es sind somit ein rein elektrischer Antrieb, ein alleiniger Antrieb über den Verbrennungsmotor, ein Antrieb über den Verbrennungsmotor mit gleichzeitigem Laden der Batterien über den mitlaufenden Generator und ein Starten des Verbrennungsmotors über den Elektromotor möglich. Der Antrieb kann wieder vorwärts, rückwärts und in Neutralstellung laufen.

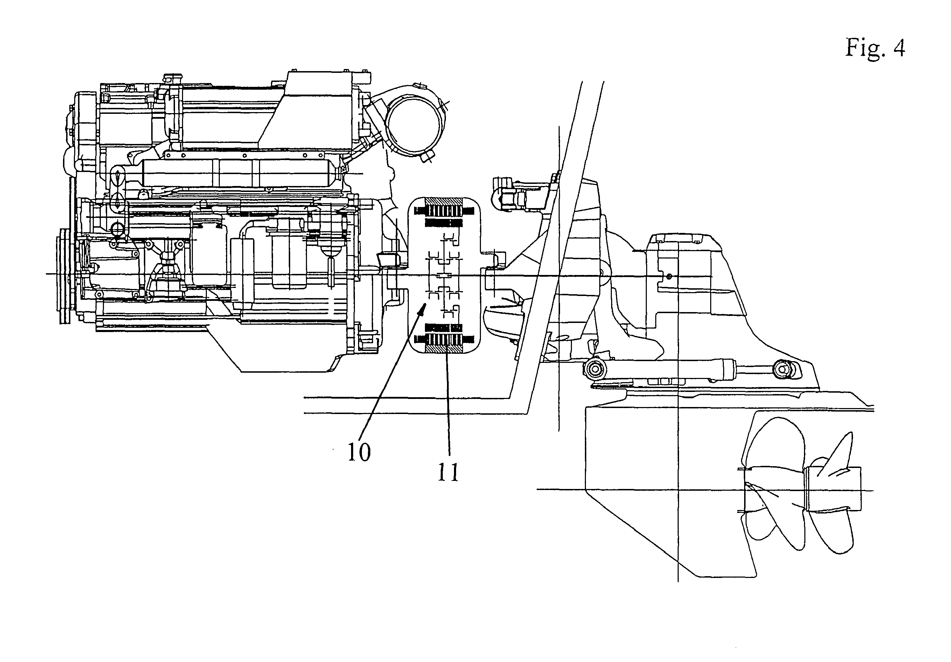

Eine analoge Ausführungsform, jedoch mit drei formschlüssigen Kupplungen als Schaltelemente 10 zeigt Fig. 4. Diese Ausführung weist gegenüber jener aus Fig. 3 den zusätzlichen Vorteil auf, dass bei einem Z-Antrieb oder einem Getriebe, bei dem keine Neutral-Stellung vorhanden ist, ebenfalls ein Starten des Verbrennungsmotors über den Elektromotor oder ein reiner Ladebetrieb der Batterien über den Generator möglich wird. Ein weiterer wesentlicher Vorteil dieser Ausführung ist, dass auch bei geliftetem Z-Antrieb hier ein Starten des Verbrennungsmotors über den Elektromotor oder ein reiner Ladebetrieb der Batterien über den Generator möglich ist.

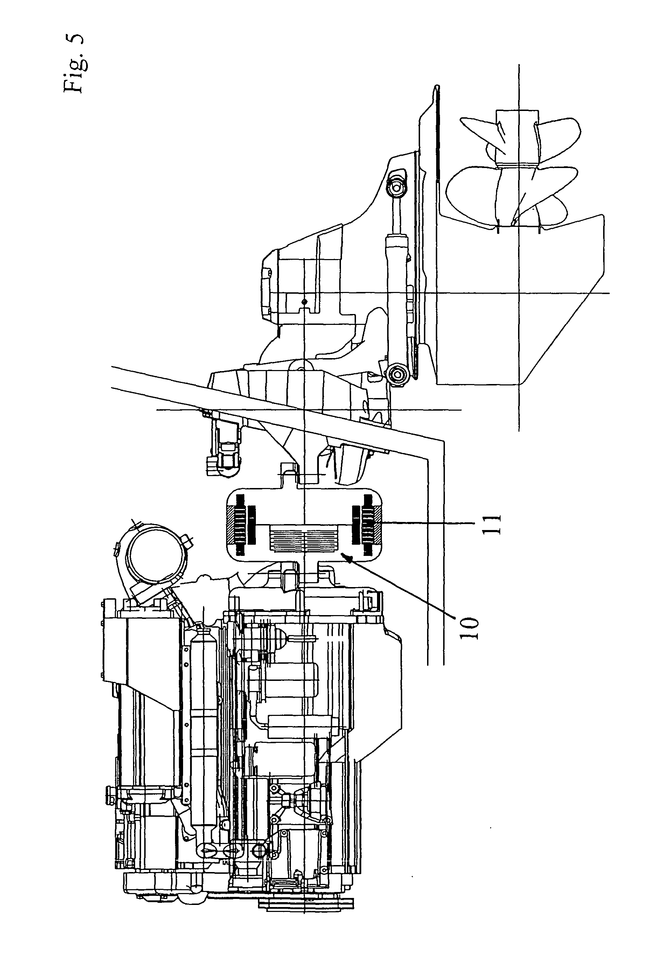

Fig. 5 stellt eine alternative Ausführung des Hybridmoduls nach Fig. 2 dar, wobei hier jedoch die Schaltelemente 10 eine reibschlüssige Kupplung, beispielsweise eine nasse Lamellenkupplung oder Trockenkupplung sind. Diese Ausführungsform ermöglicht dieselben Betriebsarten wie jene aus Fig. 2.

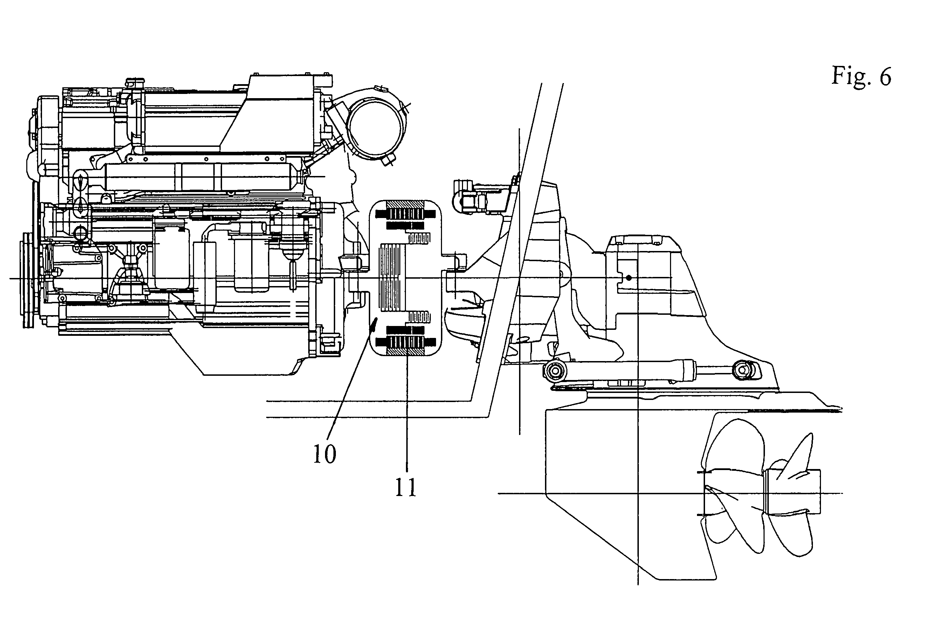

Fig. 6 stellt eine alternative Ausführung des Hybridmoduls nach Fig. 3 dar, wobei hier jedoch die Schaltelemente 10 zwei reibschlüssige Kupplungen sind. Diese Ausführungsform ermöglicht dieselben Betriebsarten wie jene aus Fig. 3.

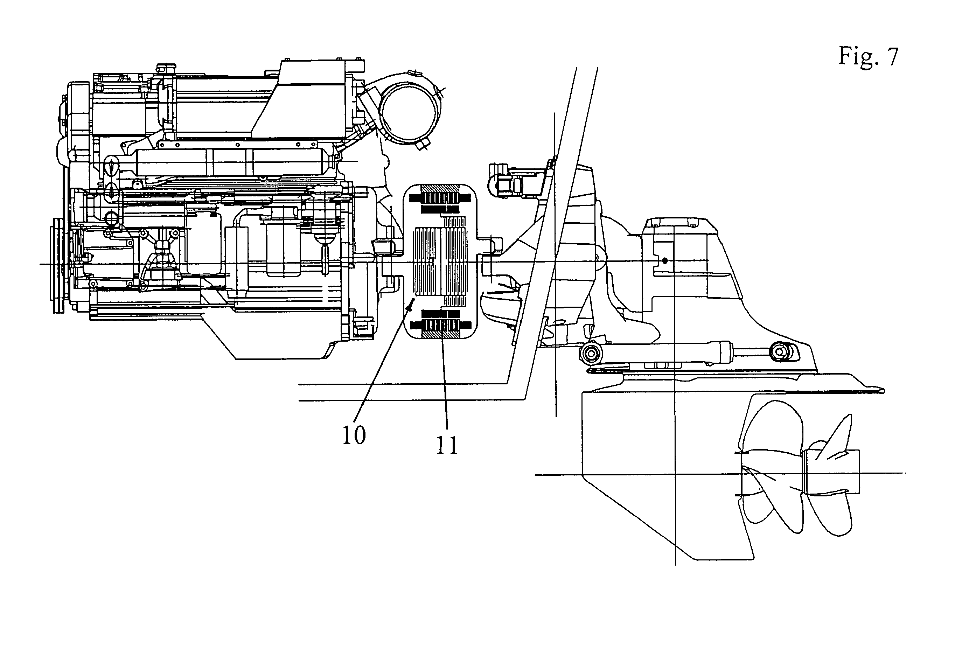

Fig. 7 stellt eine alternative Ausführung des Hybridmoduls nach Fig. 4 dar, wobei hier jedoch die Schaltelemente 10 aus drei reibschlüssigen Kupplungen bestehen. Diese Ausführungsform ermöglicht dieselben Betriebsarten wie jene aus Fig. 4.

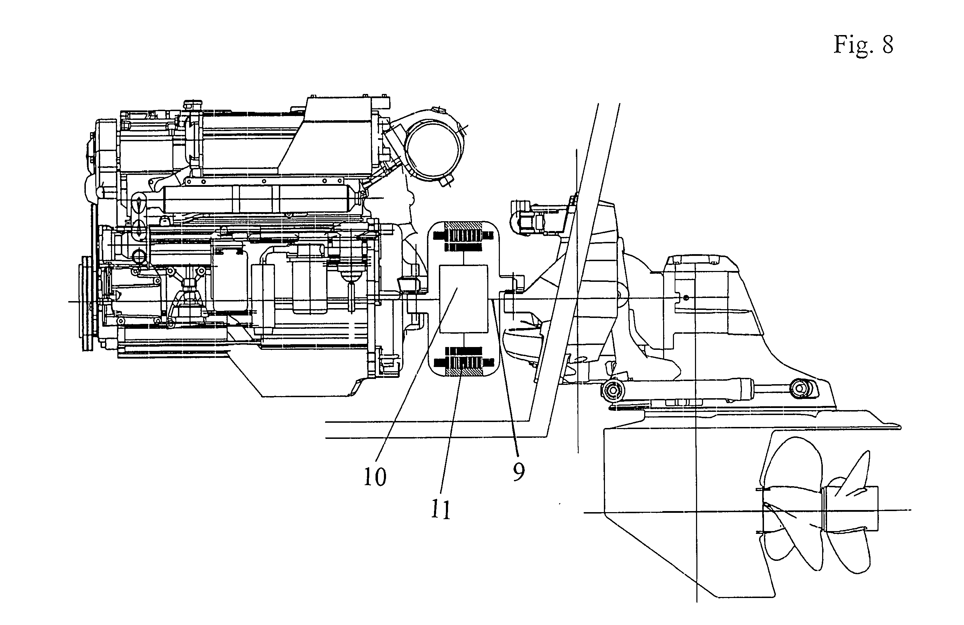

Fig. 8 zeigt nochmals schematisch den Aufbau eines Hybridmoduls 7 mit ringförmigem Generator-Motor 11, der konzentrisch zur Hauptwelle 9 und den Schaltelementen 10 angeordnet ist. Für die Schaltelemente 10 sind hier alle Varianten aus den Figuren 1 bis 7 möglich.

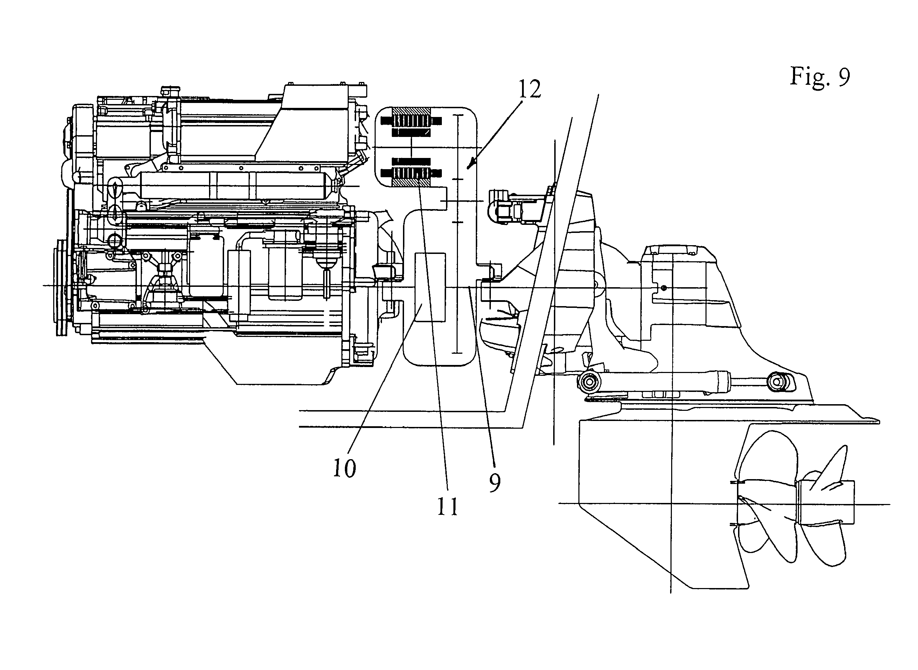

In Fig. 9 ist eine zu Fig. 8 alternative Ausführung des Hybridmoduls 7 schematisch dargestellt, wobei hier der Generator-Motor 11 als kompakte Einheit, jedoch nicht konzentrisch, sondern parallel zur Hauptachse 9 ausgebildet ist und mit dieser über beispielsweise einen Stirnradsatz 12, einen Kettenantrieb, Riemenantrieb oder ähnlichem verbunden ist.

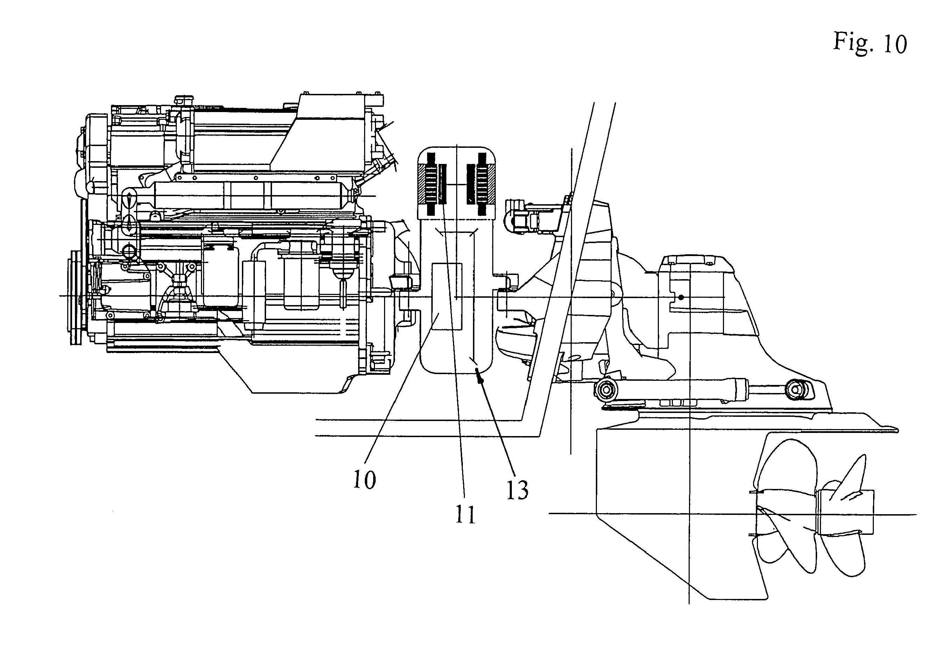

Eine weitere alternative Ausführung hierzu ist in Fig. 10 dargestellt. Hier ist der kompakt gebaute Generator-Motor 11 in einem Winkel, beispielsweise wie abgebildet in einem rechten Winkel zur Hauptachse 9 angeordnet und mit dieser beispielsweise über Kegelräder 13, Kronenräder, einen Schneckenantrieb oder ähnlichem verbunden.

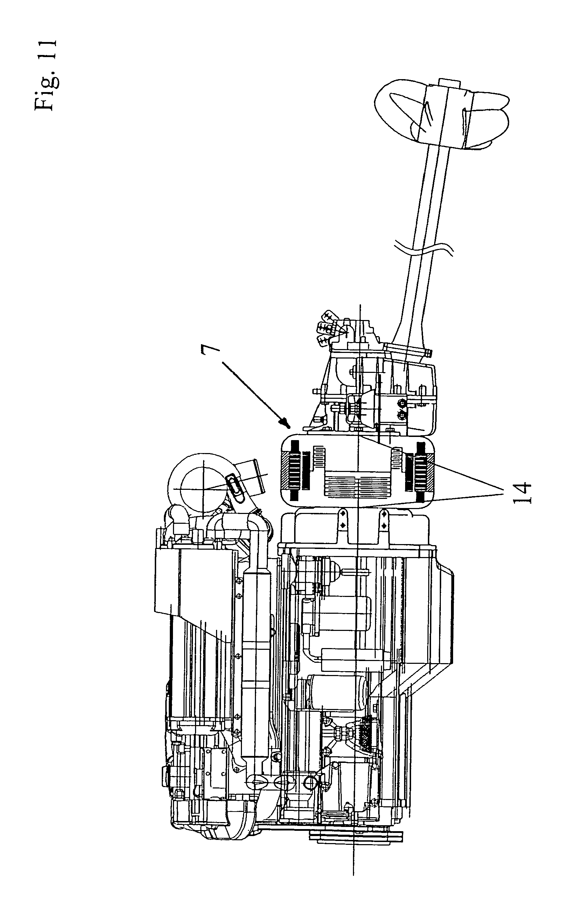

In den Figuren 11 bis 13 sind exemplarisch drei Verwendungen des Hybridmoduls 7 als nachträgliches Einbaumodul mit entsprechend ausgebildeten Anschlussflanschen dargestellt. Hierbei ist in Fig. 11 ein handelsübliches Innenbordgetriebe für Wellenanlagen und Surface Drives mit zweimal jeweils SAE-7 Normanschlussflansche 14, auch unter der Bezeichnung Borg-Warner Flansch bekannt, zu erkennen.

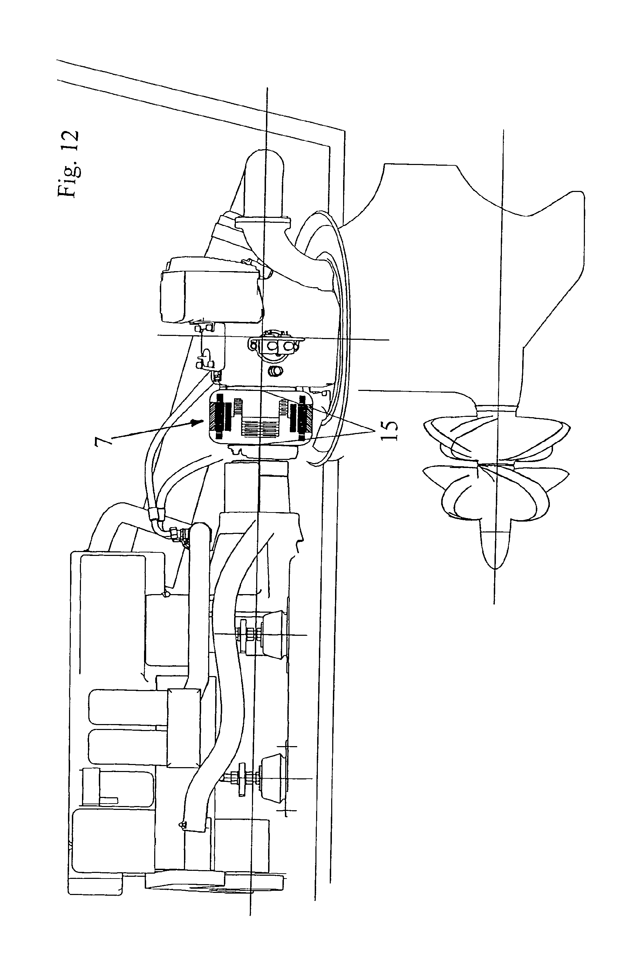

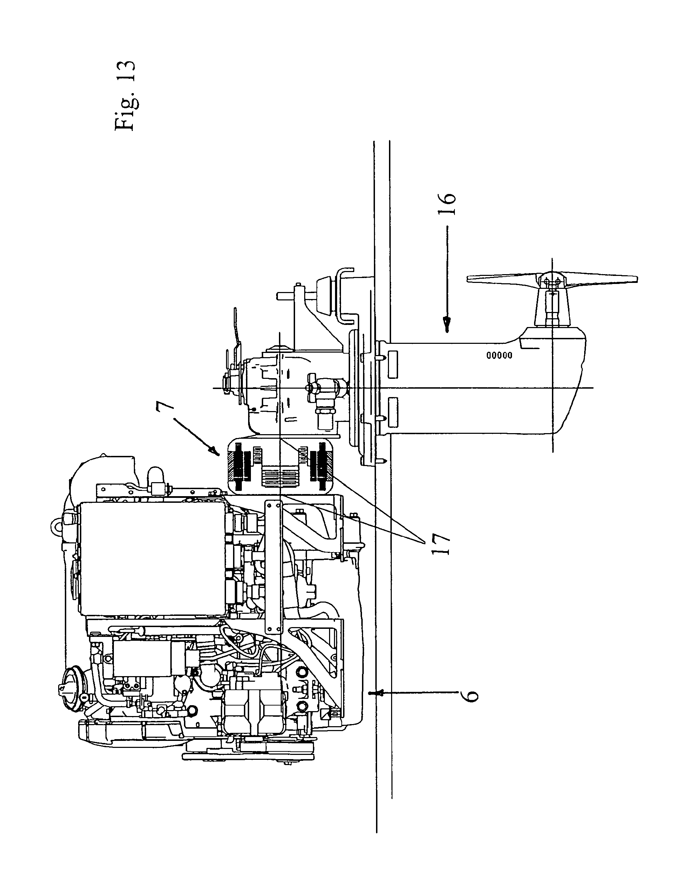

In Fig. 12 ist ein VOLVO-Penta IPS-Antrieb mit entsprechenden Anschlussflanschen 15 für IPS-Antriebe dargestellt. Fig. 13 zeigt einen weiteren exemplarischen Verbrennungsmotor 6 mit Saildrive 16 und entsprechenden Anschlussflanschen 17. Es versteht sich von selbst, dass diese Form des nachträglichen Einbaus des Hybridmoduls 7 als Sandwichbauteil auch bei anderen Antrieben verwendet werden kann, wie beispielsweise MerCruiser Stem-Antriebe, VOLVO-Penta Stern-Antriebe, IP-Drives, CummingsMerCruiser ZEUS-Pod-Drives, und anderen hier nicht dargestellten Varianten von Antriebssystemen.

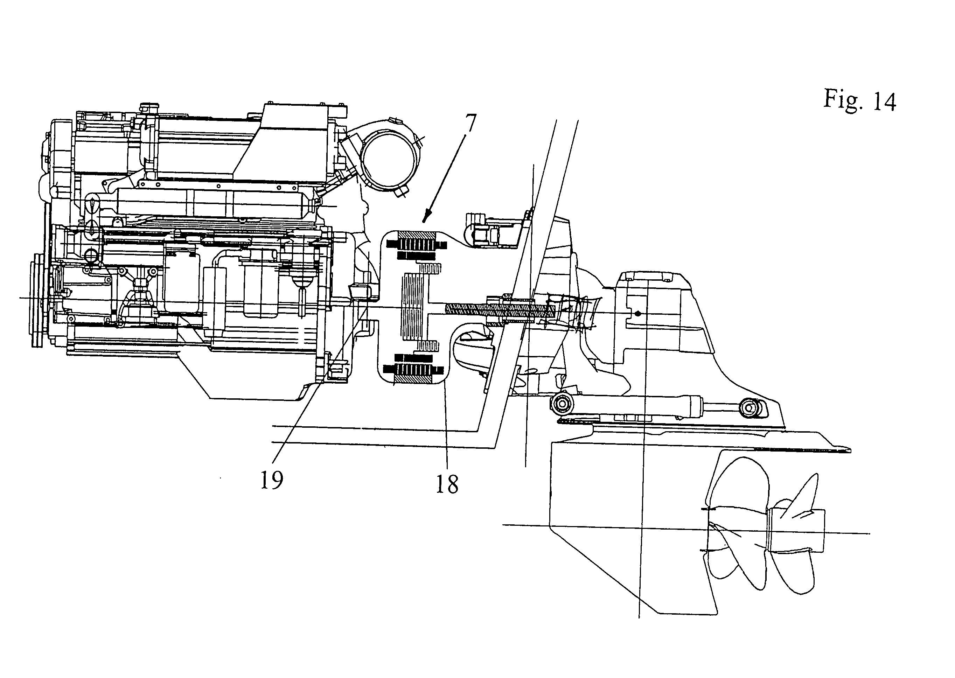

Das Gehäuse 8 des Hybridmoduls 7 kann aber auch als Erweiterung des Getriebegehäuses ausgebildet sein. Exemplarisch für diese Anwendungsversionen sind hier einige Beispiele in den Figuren 14 bis 19 gezeigt.

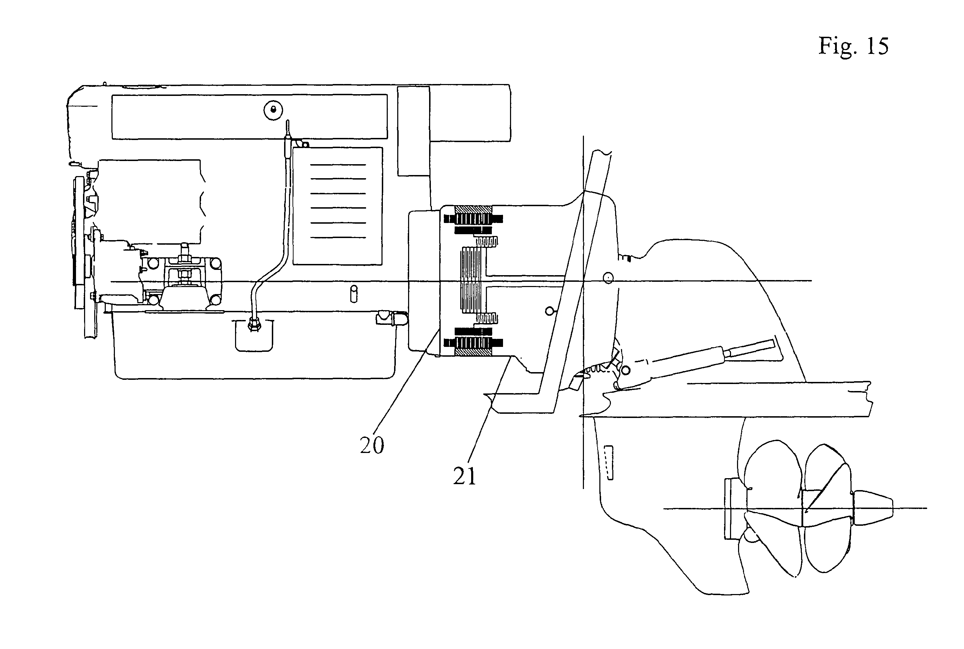

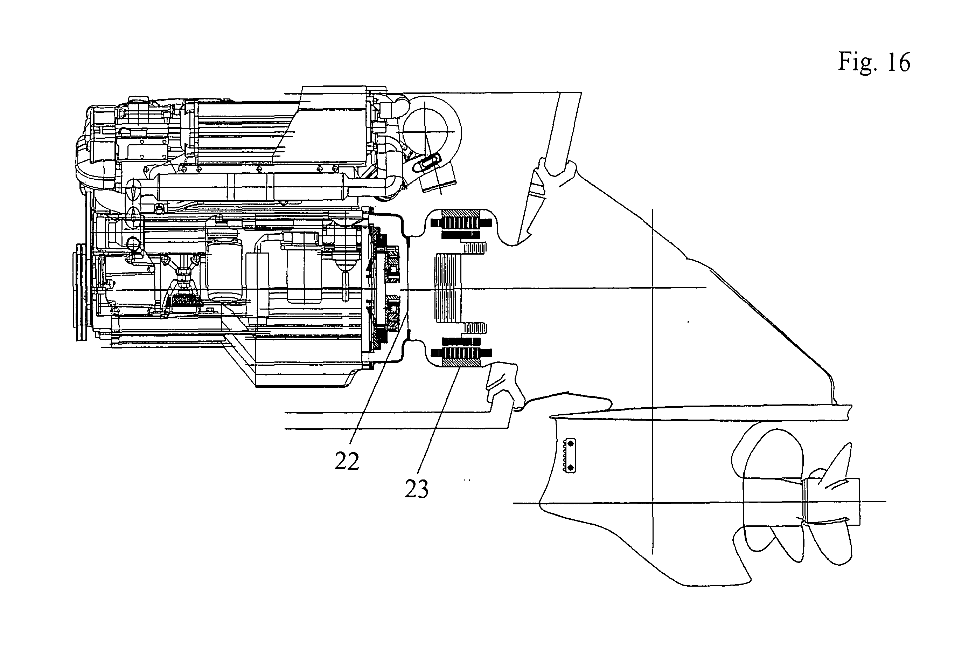

Fig. 14 zeigt eine neue Transomplatte 18 mit integriertem Hybridmodul 7 und einem passenden MerCruiser Anschlussflansch 19. Fig. 15 zeigt den VOLVO-Penta Z-Antrieb mit passendem Volvo-Penta Anschlussflansch 20 und einer neuen Volvo-Pneta Transomplatte 21 mit integriertem Hybridmodul 7. In Fig. 16 ist ein IP-Drive der Fa. GHM mit einem SAE-7 BW-Normflansch 22 und einem modifizierten Transomgehäuse 23 gezeigt.

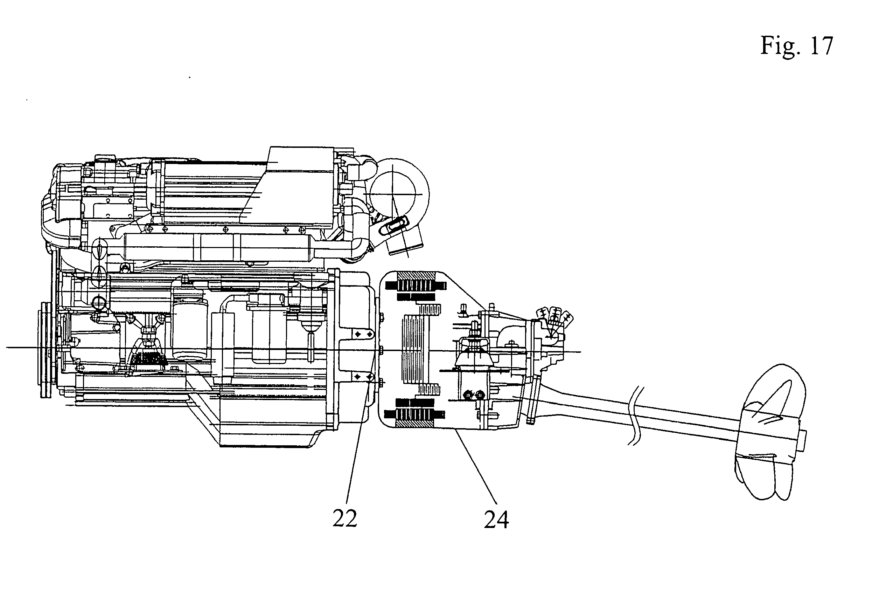

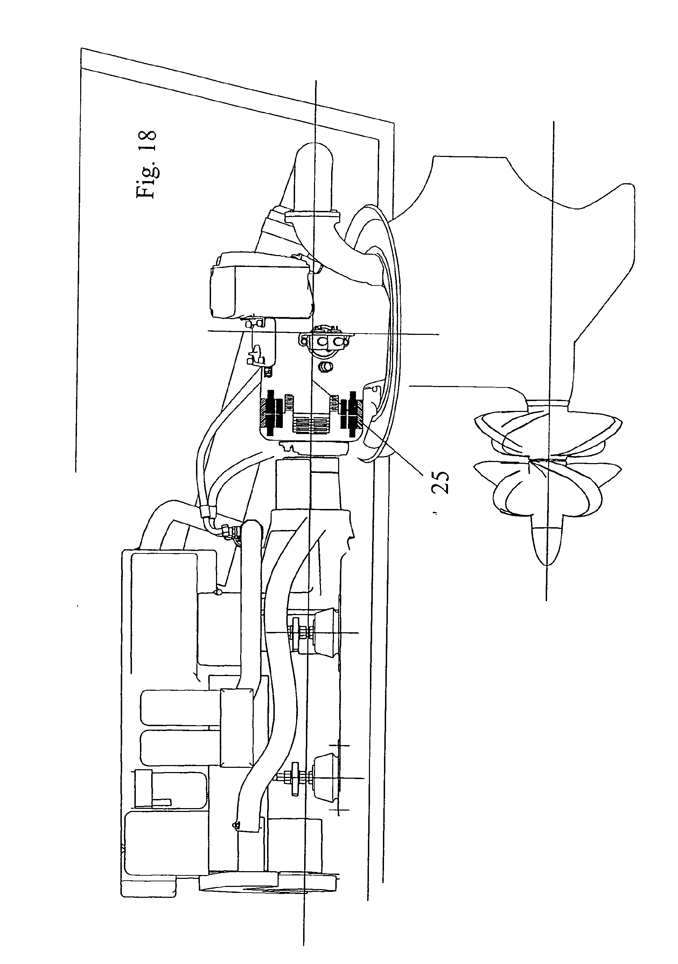

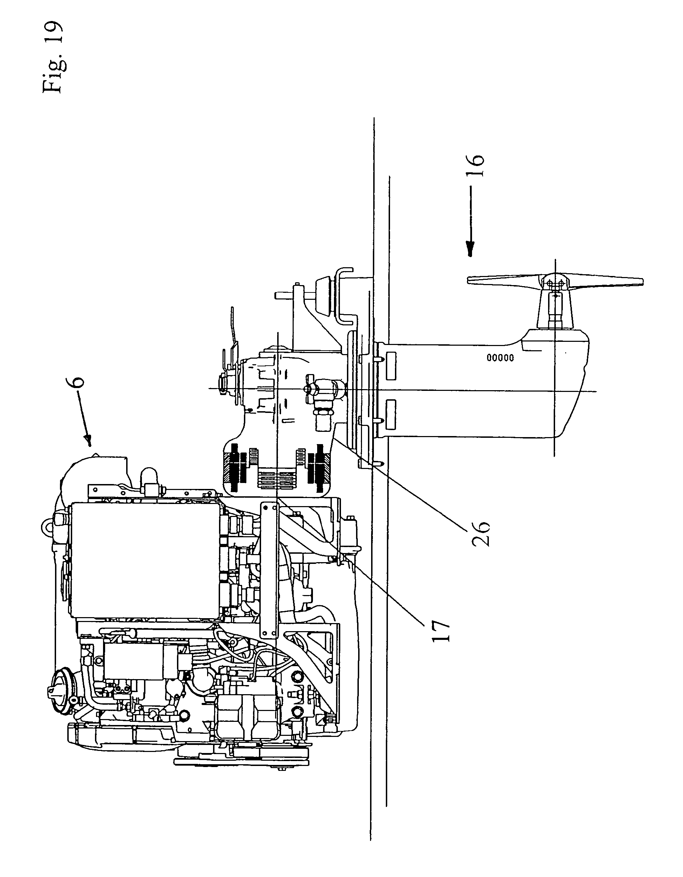

Fig. 17 stellt ein Innenbordgetriebe für Wellenanlagen und Surface Drives mit einem SAE-7 BW-Normflansch 22 und Innenbordgetriebe 24 mit integriertem Hybridmodul dar. Aus Fig. 18 ist die Integration des Hybridmoduls 7 in einem typischen IPS-Antrieb 25 erkennbar. Fig. 19 zeigt den Verbrennungsmotor 6 aus Fig. 13 mit einem passenden Anschlussflansch 17 und einem Saildrive 16 mit integriertem Hybridmodul in seinem Gehäuse 26.

Der besondere Vorteil des erfindungsgemäßen Hybridmoduls besteht vor allem darin, dass es konstruktiv sehr einfach aufgebaut ist. Es ermöglicht den wahlweisen Antrieb eines Wasserfahrzeugs entweder über einen herkömmlichen Verbrennungsmotor oder über einen Elektromotor, der als Generator-Motor ausgebildet ist und daher auch die Ladung der Batterien für den Elektromotorbetrieb ermöglicht, als auch den Antrieb über beide Antriebssysteme.

Von besonderem Vorteil ist der Umstand, dass durch die Umschaltung der Drehrichtung des Generator-Motors bei Elektromotorantrieb auf der Getriebeseite auf einen Rückwärtsgang verzichtet werden kann, wobei dann die Rückwärtsfahrt immer elektrisch durch Änderung der Drehrichtung des Elektromotorantriebs erfolgt. Dadurch kann das Getriebe einfacher aufgebaut sein und hat zudem weniger Gewicht.

Mit der vorliegenden Erfindung wird der Betrieb von Wasserfahrzeugen mit Verbrennungsmotoren auch in ökologisch sensiblen Gebieten ermöglicht und eine bedeutende Emissions- und Geräuschreduktion erzielt. Ein weiterer Vorteil liegt darin, dass das Gesamtgewicht des Antriebsaggregates nicht wesentlich erhöht wird. Das Hybridmodul ist ideal für die Nachrüstung geeignet, sein Gehäuse kann aber auch für Neufahrzeuge sehr vorteilhaft in das Gehäuse des Getriebes integriert werden.

## Patentansprüche

1. Hybridmodul zum Einbau zwischen einem Verbrennungsmotor und einem Getriebe eines Wasserfahrzeuges, wobei ein Schwungrad im Gehäuse des Verbrennungsmotors angeordnet ist, **dadurch gekennzeichnet, dass** das Hybridmodul (7) außerhalb des Gehäuses des Verbrennungsmotors (6) vorgesehen ist und ein Hybridmoudl-Gehäuse (8), einen darin angeordneten Generator-Motor (11), sowie eine Schaltung (10) zur wahlweisen Verbindung des Getriebes (4) mit dem Verbrennungsmotor (6) und/oder dem Generator-Motor (11) umfasst.

2. Hybridmodul nach Anspruch 1, **dadurch gekennzeichnet, dass** es zum nachträglichen Einbau bei Wasserfahrzeugen als separates Bauteil in der Form eines Sandwich geeignet ist.

3. Hybridmodul nach Anspruch 1, **dadurch gekennzeichnet, dass** sein Gehäuse (8) als Erweiterung einer Transomplatte (4a) oder eines Transomgehäuses (18, 21, 23) des Getriebes (4) ausgebildet ist.

4. Hybridmodul nach Anspruch 1, 2 oder 3, **dadurch gekennzeichnet, dass** die Rückwärtsfahrt des Wasserfahrzeugs elektrisch durch Änderung der Drehrichtung des Generator-Motors (11) im Elektromotor-Antriebsmodus erfolgt.

5. Hybridmodul nach einem der Ansprüche 1 bis 4, **dadurch gekennzeichnet, dass** die Schaltung (10) als Freilauf ausgebildet ist.

6. Hybridmodul nach einem der Ansprüche 1 bis 4, **dadurch gekennzeichnet, dass** die Schaltung (10) als formschlüssige Verbindung mit einer, zwei oder drei formschlüssigen Kupplungen, insbesondere in der Form von Klauenkupplungen oder als Synchronisierung ausgebildet ist.

7. Hybridmodul nach einem der Ansprüche 1 bis 4, **dadurch gekennzeichnet, dass** die Schaltung (10) als reibschlüssige Verbindung mit einer, zwei oder drei reibschlüssigen Kupplungen, insbesondere in der Form von nassen Lamellenkupplungen oder Trockenkupplungen ausgebildet ist.

8. Hybridmodul nach einem der Ansprüche 1 bis 7, **dadurch gekennzeichnet, dass** der Generator-Motor (11) ringförmig konzentrisch zur Hauptwelle (9) und den Schaltelementen (10) angeordnet ist.

9. Hybridmodul nach einem der Ansprüche 1 bis 7, **dadurch gekennzeichnet, dass** der Generator-Motor (11) kompakt parallel zur Hauptwelle (9) angeordnet ist und diese über einen Stirnradsatz (12), einen Kettenantrieb oder einen Riemenantrieb antreibt.

10. Hybridmodul nach einem der Ansprüche 1 bis 7, **dadurch gekennzeichnet, dass** der Generator-Motor (11) kompakt in einem Winkel zur Hautwelle (9) angeordnet ist und diese mittels Kegelräder (13), Kronenräder oder einem Schneckenantrieb antreibt.

11. Verwendung eines Hybridmoduls nach einem der Ansprüche 1 bis 10, **dadurch gekennzeichnet, dass** es als Sandwichbauteil mit entsprechend ausgebildeten Gehäuseanflanschungen (14, 15, 17, 19, 20, 22) für beliebige Verbrennungsmotoren (6) und beliebige Antriebseinrichtungen (3) eingesetzt wird.
